# EUROPEAN PATENT APPLICATION

(11) **EP 4 621 311 A1**
(43) Date of publication of application: **24.09.2025**
(21) Application number: 24177455.3
(22) Date of filing: 22.05.2024
(51) Int. Cl.: F24T 10/13, F24T 10/15, F24T 10/17

(54) **SYSTEM FOR THE EXPLOITATION OF ROCK MASS HEAT**

(30) Priority: 22.03.2024 PL 44807924
(71) Applicant: Akademia Gorniczo-Hutnicza im. Stanislawa Staszica w Krakowie, 30-059 Krakow (PL)
(72) Inventor: Sliwa, Tomasz, 32-020 Wieliczka (PL); Sapinska-Sliwa, Aneta, 32-020 Wieliczka (PL); Drosik, Jakub, 42-600 Tarnowskie Góry (PL); Bandura, Kamil, 30-728 Kraków (PL)
(74) Representative: Rogozinska, Alicja

(57) **Abstract**

A system of devices for the exploitation of heat from the rock mass is characterized in that a working medium (3a) in a liquid state and working medium (3b) in a gaseous state are located in the borehole (1), constituting the evaporator, wherein a gas turbine (4) is located between an outlet port of the head (2) and a heat exchanger (5), constituting the condenser.

## Description

The subject of the invention is a system of devices for the exploitation of heat from the rock mass, that can be applicable in the fields of power engineering related to renewable energy sources.

Borehole heat exchangers are known, among which the most popular is a design containing a single U-tube, as disclosed in Korean patent application KR10-2018-0032253A. Double U-tube designs are also encountered in practice. Also known are borehole heat exchangers with a concentric design. An example of such an exchanger is disclosed in the Polish patent description PL222919B1.

Deep borehole heat exchangers can be created from scratch or by adapting decommissioned boreholes or by adapting destined for decommissioning, depleted or negative boreholes. The large number of decommissioned deep boreholes in Poland and around the world, that can be adapted into borehole heat exchangers, ranks this method first among all in terms of minimizing geological and technical risks. In the conference materials by P. Dziadzio et al., titled: "Deep borehole heat exchanger in Sekowa - the concept of innovative borehole installation - pilot." (Boreholes: an essential element of power energy transformation: 1st seminar "Geoenergetics and Geothermal Heat Pumps" on the topic: borehole mining in the energy revolution: [Cracow, Poland, September 7 - 8, 2021] (pol. "*G* 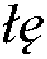 *boki otworowy wymiennik ciep* 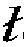 *a w S* 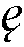 *kowej* - *koncepcja innowacyjnej instalacji otworowej* - *pilotaz"* (Otwory wiertnicze: istotny element przekszta 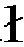 ce 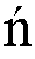 energetycznych: I seminarium "Geoenergetyka i geotermalne pompy ciepla" na temat: Górnictwo otworowe w rewolucji energetycznej: [Kraków, 7-8 września 2021 r.]), the concept of using a borehole, drilled to a depth of 3,000 meters, was presented. This borehole did not show the presence of geothermal water with the expected capacity to enable economic use of it for heating purposes. However, instead of the standard procedure of decommissioning the borehole, it was decided to implement a pilot project involving the adaptation of the well to a deep borehole heat exchanger.

The Polish patent description PL192722B1 discloses a method of adapting a borehole into a deep borehole heat exchanger, which makes it possible to extract thermal energy from the rock mass or to store thermal energy in the rock mass, based on the fact that the borehole is washed and the drilling fluid is exchanged for the heat carrier. Then a column of inner tubes, preferably having a low coefficient of thermal conductivity, is sink, followed by the installation of a circulation head at the outlet of the borehole and inner tubes.

The invention solves the technical problem of using boreholes for the exploitation of heat from the rock mass.

The system of devices for the exploitation of heat from the rock mass, includes a borehole that is equipped with a head, a working medium and a heat exchanger, connected by means of a pipe to the inlet and outlet ports of the head. The essence of the invention is that the borehole, that constitutes an evaporator which contains a working medium in a liquid state and a working medium in a gaseous state, while between an outlet port of the head and the heat exchanger constituting a condenser, a gas turbine is arranged.

The object of the invention is visualized in an embodiment on a schematic drawing, showing a cross-section through the borehole and a scheme of the system of devices on the surface.

The borehole 1, constituting an evaporator, is secured on the surface by the head 2 which has an inlet port and an outlet port. In the borehole 1 a working medium 3a in a liquid state is contained at its bottom part and a working medium 3b in a gaseous state is contained near the surface (Fig.). The outlet port of the head 2 is connected by means of a pipe to the gas turbine 4 and subsequently to the heat exchanger 5, that constitutes the condenser. The heat exchanger 5 is connected to the inlet port of the head 2 and to the discharge tube 6, located inside the borehole 1.

The operation of the invention consists in the fact that a heat carrier 3a in a liquid state is heated by means of heat from the rock mass and passes into a gaseous state heat carrier 3b having a pressure selected in such a way that it exceeds the atmospheric pressure. Thanks to this, the gas flows through the gas turbine 4 and the pressure energy is received in the gas turbine 4. Then the heat from the working medium 3b in the gaseous state with low pressure is received by the heat exchanger 5, which acts as a condenser, from which condenser the working medium 3a in a liquid state is discharged back into the borehole 1.

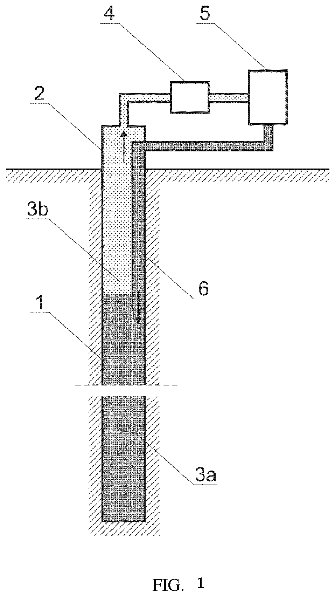

## Claims

1. A system of devices for the exploitation of heat from the rock mass, comprising a borehole being equipped with a head, a working medium and a heat exchanger, connected by means of a pipe to the inlet and outlet ports of the head, **characterized in that** in the borehole (1), that constitutes the evaporator a working medium (3a) in a liquid state and a working medium (3b) in a gaseous state are contained, wherein between an outlet port of the head (2) and the heat exchanger (5), constituting the condenser, a gas turbine (4) is arranged.
